# EUROPÄISCHE PATENTANMELDUNG

(11) **EP 0 825 805 A2**
(43) Veröffentlichungstag der Anmeldung: **25.02.1998**
(21) Anmeldenummer: 97113831.8
(22) Anmeldetag: 11.08.1997
(51) Int. Cl.: H05B 37/02

(54) **Elektrischer Schalter mit mindestens einem zeitabhängigen Schaltzeitpunkt**

(30) Priorität: 17.08.1996 DE 19633160
(71) Anmelder: ABB PATENT GmbH, 68309 Mannheim (DE)
(72) Erfinder: Koepernik, Jochen, 06369 Schortewitz (DE); Brückner, Michael, 01069 Dresden (DE)
(74) Vertreter: Rupprecht, Klaus, Dipl.-Ing.

(57) **Zusammenfassung**

Die Erfindung betrifft einen elektrischen Schalter mit mindestens einem von der Zeit abhängigen Schaltzeitpunkt, insbesondere einen Dämmerungsschalter mit einer jahreszeitabhängigen Einschaltdauer. Ein einfach aufgebauter Zeitschalter läßt sich dadurch realisieren, daß ein lichtempfindlicher Sensor (1) vorgesehen ist, der dazu dient, an mindestens einem Kalendertag den Tag/Nacht- und Nacht/Tag-Wechsel zu erfassen. Ein Zeitmesser (4), vorzugsweise ein elektronischer Zähler, mißt die Zeitabstände zwischen den Tag/Nacht- und Nacht/Tag-Wechseln und damit die aktuelle Tages- und/oder Nacht-Länge. Eine Logikeinheit (5) stellt eine mathematische Funktion oder eine Wertereihe bereit, die es ihr erlaubt mit Hilfe der bekannten jahreszeitlich bedingten Sonnenauf- und Sonnenuntergangszeiten, die ihrerseits mit der jeweiligen Tages- und/oder Nacht-Länge korrelieren, mindestens einen Tag/Nacht- und/oder Nacht/Tag-Wechsel oder mindestens einen hiervon abgeleiteten Zeitpunkt zeitlich zu definieren.

## Beschreibung

Die Erfindung betrifft einen elektrischen Schalter mit mindestens einem von der Zeit abhängigen Schaltzeitpunkt, insbesondere einen Dämmerungsschalter mit einer jahreszeitabhängigen Einschaltdauer, nach dem Oberbegriff des Anspruchs 1.

Es sind Dämmerungsschalter bekannt, die beim Unterschreiten einer bestimmten Helligkeit eine Schaltfunktion auslösen, in der Regel eine Lichtquelle einschalten. Andererseits sind auch Zeitschalter bekannt, die zu vorgegebenen Zeitpunkten eine beliebige elektrische Funktionseinheit ein- oder ausschalten. In der DE 43 12 056 A1 wird sogar ein Bewegungsmelder beschrieben, dessen Dämmerungsschaltfunktion von einem Zeitschalter übernommen wird, der die jahreszeitlich bedingten Änderungen der Tageszeitlänge berücksichtigt. Der Aufwand für die in solche Schaltgeräte integrierten Uhren ist jedoch relativ hoch. Außerdem ist das Stellen der Uhr bei der Erstinstallation problematisch. Es müssen absolute Zeit- und Datumsangaben gespeichert werden, durch das Uhrwerk bedingte Zeitfehler können langfristig erhebliche Schaltzeitverschiebungen bewirken.

Aufgabe der Erfindung ist es deshalb, einen elektrischen Schalter mit mindestens einem zeitabhängigen Schaltzeitpunkt nach dem Oberbegriff des Anspruchs 1 zu schaffen, mit dem es gelingt, ohne Inanspruchnahme üblicher zeitgenauer Uhrwerke oder einen Funkuhrempfänger auf einfache Weise zeitgerecht zu schalten. Gleichzeitig soll es dem Schalter möglich sein, die richtige Zeit, ähnlich wie bei Funkuhren, automatisch zu bestimmen.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Mit einem Hell/Dunkel-Entscheider erfaßt man den Tag/Nacht- und Nacht/Tag-Wechsel an mindestens einem Kalendertag, und kann anschließend die aktuelle Tages- und/oder Nacht-Länge messen, die sich aus den Zeitabständen zwischen den beiden Wechseln ergibt. Mit der ermittelten aktuellen Tages- oder Nacht-Länge ist man im Besitz einer Größe, aus der sich mit Hilfe einer Logikeinheit die effektive Jahreszeit bestimmen läßt, der dieser Tag zuzuordnen ist. Zunächt kann hierbei zwar nicht zwischen Frühling und Herbst unterschieden werden, aber das ist zur Bestimmung der Tageszeit auch belanglos, da die hier angesprochenen Pendants etwa gleiche Sonnenauf- und Sonnenuntergangszeiten aufweisen. Die ermittelten Tag/Nacht- und Nacht/Tag-Wechsel lassen sich auf diese Weise zeitlich definieren, so daß ausgehend von ihnen auch ein beliebiger anderer Zeitpunkt definiert werden kann, sofern die als Differenz dazwischenliegende Zeitspanne mit hinreichender Genauigkeit gemessen werden kann. Hierzu eignet sich schon ein einfacher Zähler.

Dem Hell/Dunkel-Entscheider ist ein lichtempfindlicher Sensor vorgeschaltet, der ein von der Helligkeit abhängiges Signal liefert, das bei Über- oder Unterschreiten eines vorgegebenen Grenzwertes den Hell/Dunkel-Entscheider aktiviert. Zwischen dem lichtempfindlichen Sensor und dem Hell/Dunkel-Entscheider ist ein Kurzzeitfilter eingefügt, das kurzzeitige vom Sensor erfaßte Helligkeitsschwankungen unterdrückt.

Außer kurzzeitigen Helligkeitsänderungen, die z. B. durch Autoscheinwerfer oder vorbeiziehende Wolken verursacht werden, gibt es auch andere, meist witterungsbedingte, länger anhaltende Helligkeitseinflüsse. Z. B. kann ein Gewitter bisweilen einen Tag/Nacht-Wechsel vortäuschen. Eine zweckmäßige Weiterbildung des Erfindungsgegenstandes sieht deshalb vor, daß die jeweils gemessene Tages- und/oder Nacht-Länge vor ihrer weiteren Auswertung einer Plausibilitätsprüfung unterzogen wird. Die erforderliche Plausibilität ist z. B. dann nicht gegeben, wenn die Nacht (in Wirklichkeit das Gewitter) nur zwei Stunden dauert.

Weiterhin ist klar, daß sich das Wetter auf die gemessene Tages- und/oder Nacht-Länge auswirken kann. Um daraus resultierende Zeitverschiebungen zu minimieren, ist in Weiterbildung des Erfindungsgegenstandes vorgesehen, daß die Tages- und/oder Nacht-Länge an zwei oder mehr aufeinanderfolgenden Tagen gemessen wird und daraus eine mittlere Tages- und/oder Nacht-Länge berechnet wird. Hierdurch werden verfälschte Meßergebnisse schnell unterdrückt und eine relativ genaue Zeitermittlung ermöglicht. Von Vorteil kann es sein, wenn an zwei oder mehr aufeinanderfolgenden Tagen die Tageslänge gemessen wird und daraus die Tendenz länger oder kürzer werdender Tage ermittelt wird. Denn nun ist es möglich, unter Berücksichtigung der ermittelten Tageslängentendenz eine um den jeweiligen Zuwachs oder die Abnahme bereinigte, mittlere Tages- und/oder Nacht-Länge zu berechnen.

Zur Unterscheidung von Tag- und Nachtzeiten wird zwischen einem Überschreiten und einem Unterschreiten eines Belichtungsschwellwertes des Sensors unterschieden und ein Zeifienster dient dazu, im Bereich der Tag/Nacht- und Nacht/Tag- Wechsel eine stetige Zu- oder Abnahme der Helligkeit zu erfassen.

Bei vielen Anwendungen wird man sich damit begnügen schon bei der Herstellung eines zeitgesteuerten Schalters bestimmte Schaltzeiten vorzugeben. Bisweilen kann es jedoch sehr vorteilhaft sein, wenn es dem Anwender ermöglicht ist, den Zeitpunkt, an dem eine Schaltfunktion ausgelöst werden soll, selbst einzustellen, und wenn dann die vom Startzeitpunkt ausgehende jahreszeitlich variable Zeitspanne automatisch an den eingestellten Zeitpunkt anpaßt wird.

Der elektrischer Schalter kann so aufgebaut werden, daß er ein elektrisches Schalten zu einem oder mehreren zeitlich fixierten, an der Urzeit orientierten Zeitpunkten ermöglicht. Zweckmäßig ist es, wenn ein erster Schaltzeitpunkt zu Beginn der Nachtruhe und ein zweiter Schaltzeitpunkt am Ende der Nachtruhe definiert ist. Wichtig ist, daß die jeweilige Zeitspanne automatisch so vorgegeben wird, daß sich der jeweilige Schaltvorgang täglich etwa zur gleichen Zeit ereignet.

Vielseitig verwendbar ist auch ein elektrischer Schalter der als Bewegungsmelder aufgebaut ist. In diesem Fall kann der Hell/Dunkel-Entscheider bei Beginn der Dunkelheit ein Dauerlicht einschalten und bei Beginn der Nachtruhe das Dauerlicht wieder abschalten. Die Bewegungsmelderfunktion wird dann durch den Hell/Dunkel-Entscheider während der Dunkelheit solange aktiviert, solange kein Dauerlicht eingeschaltet ist.

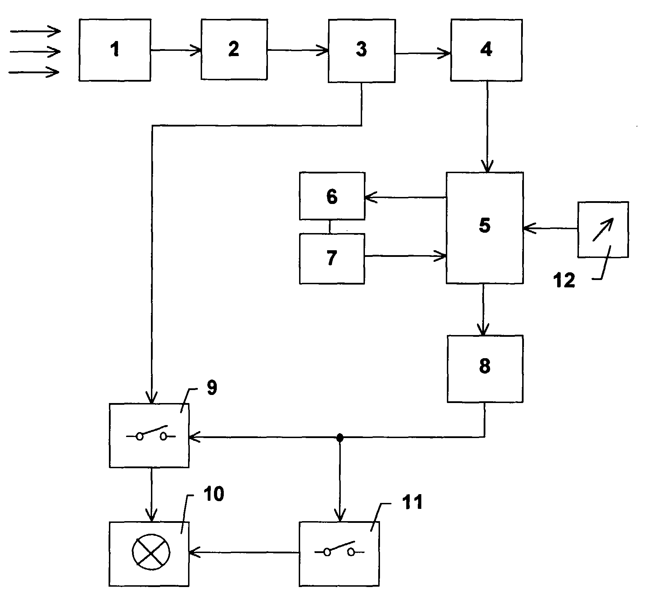

Ein Ausführungsbeispiel der Erfindung ist in der Zeichnung dargestellt und wird im folgenden näher beschrieben. Das Blockschaltbild zeigt verschiedene Funktionseinheiten des erfindungsgemäßen elektrischen Schalters, die zum großen Teil durch Software-Elemente realisiert werden. Zur besseren Verständlichkeit geht die Beschreibung jedoch von einem aus Hardware-Elementen aufgebauten Schalter aus.

Der zu beschreibende elektrische Schalter dient als Dämmerungsschalter, der beim Tag/Nacht-Wechsel eine Dauerbeleuchtung einschalten und zu vorgerückter Stunde, also bei Beginn der Nachtruhe, wieder ausschalten soll. Hierzu ist ein lichtempfindlicher Sensor 1 vorgesehen, der ein von der Helligkeit im Tagesablauf abhängiges elektrisches Signal erzeugt. Ein nachgeschaltetes Kurzzeitfilter 2 hat die Aufgabe kurzzeitige Schwankungen der Helligkeit, wie sie z. B.durch Autoscheinwerfer oder vorbeiziehende Wolken erzeugt werden, zu unterdrücken. Ein als Grenzwertschalter aufgebauter Hell/Dunkel-Entscheider 3 bewertet das vom lichtempfindlichen Sensor 1 kommende elektrische Signal. Wird ein vorgegebener Grenzwert überschritten, so handelt es sich um einen Nacht/Tag-Wechsel, während das Unterschreiten dieses Grenzwertes einen Tag/Nacht-Wechsel signalisiert. Es kann auch mit einem Zeitfenster gearbeitet werden, das im Bereich der Wechsel das Erfassen einer Helligkeitszu- oder -abnahme erlaubt.

Mit einem als Zeitmesser 4 arbeitenden Zähler wird der zeitliche Abstand zwischen dem Nacht/Tag- und Tag/Nacht-Wechsel gemessen. Eine Logikeinheit 5 unterzieht den gemessenen Wert einer Plausibilitätsprüfung, um eindeutig zu groß oder zu klein ausgefallene Meßergebnisse auszuscheiden. Wegen der witterungsbedingten Helligkeitsschwankungen wäre es leichtfertig sich auf den Meßwert nur eines Tages zu verlassen. Es ist deshalb ein Wertespeicher 6 vorgesehen, in dem die Meßwerte mehrerer aufeinanderfolgender Tage festgehalten werden. Mit Hilfe eines Mehrtagesfilters 7 wird aus diesen Werten ein Mittelwert gebildet, der dann die aktuelle Tages- oder Nachtlänge ergibt.

Der so ermittelte Wert der Tages- und/oder Nacht-Länge wird von der Logikeinheit 5 ausgewertet. Hierzu steht ihr eine gespeicherte Wertereihe oder eine geeignete mathematische Funktion zur Verfügung, mit der über die Tag/Nacht-Länge die jahreszeitabhängige Sonnenauf- und/oder -untergangszeit des jeweiligen Tages definiert wird.

Ist der Zeitpunkt des Sonnenuntergangs bekannt, so weiß man auch, wie groß die von ihm ausgehende Zeitspanne sein muß, um ein eingeschaltetes Dauerlicht bei Beginn der Nachtruhe, z. B. um 23.00 Uhr wieder auszuschalten. Es kann also von vornherein eine vom Datum bzw. der Jahreszeit abhängige Wertereihe festgelegt werden, deren Einzelwerte jeweils die richtige Zeitspanne repräsentieren. Ein Zähler 8 sorgt für die richtige Dauer der vorgegebenen Zeitspanne. Zähler 8 und Hell/Dunkel-Entscheider 3 wirken derart auf einen Lichtschalter 9, daß beim Tag/Nacht-Wechsel der Lichtschalter 9 vom Hell/Dunkel-Entscheider 3 eingeschaltet wird und um etwa 23.00 Uhr vom Zähler 8 wieder abgeschaltet wird.

Der beschriebene Dämmerungsschalter kann auf vorteilhafte Weise mit einem Bewegungsmelder 11 kombiniert werden und diesen gleichzeitig mit dem Abschalten des Dauerlichts aktivieren. So kann der Bewegungsmelder 11 das Licht auch nach 23.00 Uhr wieder einschalten, sobald und solange es benötigt wird. Ein Stellglied 12 bietet die Möglichkeit einen oder mehrere Schaltzeitpunkte individuell einzustellen.

### Bezugszeichenliste

- 1: lichtempfindlicher Sensor
- 2: Kurzzeitfilter
- 3: Hell/Dunkel-Entscheider
- 4: Zeitmesser
- 5: Logikeinheit
- 6: Wertespeicher
- 7: Mehrtagesfilter
- 8: Zähler
- 9: Schalter
- 10: Lichtquelle
- 11: Bewegungsmelder
- 12: Stellglied

## Patentansprüche

1. Elektrischer Schalter mit mindestens einem von der Zeit abhängigen Schaltzeitpunkt, insbesondere Dämmerungsschalter mit einer jahreszeitabhängigen Einschaltdauer, dadurch gekennzeichnet, daß ein Hell/Dunkel-Entscheider (3) dazu dient, an mindestens einem Kalendertag den Tag/Nacht-Wechsel und den Nacht/Tag-Wechsel zu erfassen und ein Zeitmesser (4), vorzugsweise ein elektronischer Zähler, die Zeitabstände zwischen den Tag/Nacht- und Nacht/Tag-Wechseln und damit die aktuelle Tages- oder Nacht-Länge mißt, und daß eine Logikeinheit (5) eine mathematische Funktion oder eine Wertereihe berücksichtigt, die es ihr erlaubt, ausgehend von einem Tag/Nacht- und/oder Nacht/Tag-Wechsel eine Zeitspanne bis zu einem vorgegebenen Schaltzeitpunkt zu definieren, deren Länge von der jahreszeitlich bedingten Tages- oder Nacht-Länge abhängig ist.

2. Elektrischer Schalter nach Anspruch 1, dadurch gekennzeichnet, daß dem Hell/Dunkel-Entscheider (3) ein lichtempfindlicher Sensor (1) vorgeschaltet ist, der ein von der Helligkeit abhängiges Signal liefert, das bei Über- oder Unterschreiten eines vorgegebenen Grenzwertes den Hell/Dunkel-Entscheider (3) aktiviert.

3. Elektrischer Schalter nach Anspruch 2, dadurch gekennzeichnet, daß zwischen dem lichtempfindlichen Sensor (1) und dem Hell/Dunkel-Entscheider (3) ein Kurzzeitfilter (2) eingefügt ist, das kurzzeitige vom lichtempfindlicher Sensor (1) erfaßte Helligkeitsschwankungen unterdrückt.

4. Elektrischer Schalter nach einem der vorhergehenden Ansprüche, dadurch gekennzeichnet, daß die Logikeinheit (5) die jeweils gemessene Tages- oder Nacht-Länge einer Plausibilitätsprüfung unterzieht, bevor sie diese für eine weitere Auswertung bereitstellt.

5. Elektrischer Schalter nach einem der vorhergehenden Ansprüche, dadurch gekennzeichnet, daß ein Wertespeicher (6) vorgesehen ist, der die an zwei oder mehr aufeinanderfolgenden Tagen gemessenen Werte der Tages- oder Nacht-Länge speichert und daß die Logikeinheit (5) in Verbindung mit einem geeigneten Mehrtagesfilter (7) daraus eine mittlere Tages- oder Nacht-Länge berechnet und ggf.auch die Tendenz länger oder kürzer werdender Tage ermittelt und unter Berücksichtigung der ermittelten Tageslängentendenz eine um den jeweiligen Zuwachs oder die Abnahme bereinigte, mittlere Tages- oder Nacht-Länge berechnet.

6. Elektrischer Schalter nach einem der vorhergehenden Ansprüche, dadurch gekennzeichnet, daß zur Unterscheidung von Tag- und Nachtzeiten zwischen einem Überschreiten und einem Unterschreiten der Belichtung des lichtempfindlicher Sensors (1) unterschieden wird und ein Zeitfenster dazu dient, im Bereich der Tag/Nacht- und Nacht/Tag- Wechsel eine stetige Zu- oder Abnahme der Helligkeit zu erfassen.

7. Elektrischer Schalter nach einem der vorhergehenden Ansprüche, dadurch gekennzeichnet, daß mindestens ein Stellglied (12) vorgesehen ist, mit dessen Hilfe der Schaltzeitpunkt, verändert werden kann und die Logikeinheit (5) dafür die zu definierende Zeitspanne automatisch an den eingestellten Schaltzeitpunkt anpaßt.

8. Elektrischer Schalter nach einem der vorhergehenden Ansprüche, dadurch gekennzeichnet, daß dieser so aufgebaut ist, daß er ein elektrisches Schalten zu einem oder mehreren zeitlich fixierten, an der Urzeit orientierten Zeitpunkten ermöglicht.

9. Elektrischer Schalter nach einem der vorhergehenden Ansprüche, dadurch gekennzeichnet, daß ein erster Schaltzeitpunkt zu Beginn der Nachtruhe und/oder ein zweiter Schaltzeitpunkt am Ende der Nachtruhe definiert ist und die jeweilige Zeitspanne automatisch so vorgegeben ist, daß sich der jeweilige Schaltvorgang täglich etwa zur gleichen Zeit ereignet.

10. Elektrischer Schalter nach einem der vorhergehenden Ansprüche, dadurch gekennzeichnet, daß dieser als Bewegungsmelder (11) aufgebaut ist, und der Hell/Dunkel-Entscheider bei Beginn der Dunkelheit ein Dauerlicht einschaltet und bei Beginn der Nachtruhe das Dauerlicht wieder abschaltet und/oder am Ende der Nachtruhe das Dauerlicht einschaltet und bei Beginn der Tageshelligkeit wieder abschaltet und daß die Bewegungsmelderfunktion durch den Hell/Dunkel-Entscheider während der Dunkelheit solange aktiviert ist, solange kein Dauerlicht eingeschaltet ist.
